(19)

Europäisches Patentamt
European Patent Office
Office européen des brevets

(11) **EP 4 361 645 A1**

(12) **EUROPEAN PATENT APPLICATION**

(43) Date of publication:
**01.05.2024 Bulletin 2024/18**

(21) Application number: **23205447.8**

(22) Date of filing: **24.10.2023**

(51) International Patent Classification (IPC):
**G01P 3/487** (2006.01)

(52) Cooperative Patent Classification (CPC):
**G01P 3/487**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 GB 202215751**

(71) Applicant: **Dalmatic TNV A/S**
**8520 Lystrup (DK)**

(72) Inventor: **DALL, Hans Hilmar**
**8410 Rønde (DK)**

(74) Representative: **Marks & Clerk LLP**
**15 Fetter Lane**
**London EC4A 1BW (GB)**

(54) **A ROTARY ENCODER**

(57) A rotary encoder comprising a sensor configured to measure an angle of a rotating shaft; and a controller configured to: determine a first angle of the rotating shaft at a first time; determine a second angle of the rotating shaft at a second time; calculate an angular velocity based on: 1) an angular difference between the first angle and the second angle; and 2) a time difference between the first time and the second time; and transmit an output packet comprising the angular velocity.

**Fig. 3A**

EP 4 361 645 A1

Processed by Luminess, 75001 PARIS (FR)

**Description**

FIELD

Embodiments described herein relate generally to a rotary encodes, a system comprising a rotary encoder and a method performed by a rotary encoder.

BACKGROUND

A rotary encoder is a device that measures the position of a shaft or an axle. In a magnetic rotary encoder (also referred to as a magnetic encoder) a magnet is attached to the shaft such that the magnetic field at a sensor varies as the shaft rotates. The rotary encoder determines the angular position of the shaft based on the magnetic field observed by the sensor.

A known rotary encoder transmits position information indicating the angular position of a shaft. There is a growing need to also know speed information (i.e. information indicating the angular velocity of the shaft). Speed information can be used for a variety of control tasks including, but not limited to, torque control on motors/gears. However, previous approaches to generating speed information either lack accuracy, or require a large communications overhead. In light of this a new approach is required.

Arrangements of embodiments will be understood and appreciated more fully from the following detailed description, made by way of example only and taken in conjunction with drawings in which:

> Fig. 1A shows part of a rotary encoder according to an example;
> Fig. 1B shows a plan view of a sensor implementation according to an example;
> Fig. 2A shows output waveforms from a sensor according to an example;
> Fig. 2B shows an example comparator output for the waveform shown in Fig. 2A;
> Fig. 2C shows a second sensor for determining an angular position according to an example;
> Fig. 2D shows an output of a second sensor according to an example;
> Fig. 3A shows a rotary encoder according to an example;
> Fig. 3B shows a system according to an example;
> Fig. 4A shows a method implemented by a controller of a rotary encoder according to an example;
> Fig. 4B shows a structure of an output communication packet according to an example;
> Fig. 5A shows a perspective view of a front of a rotary encoder according to an example;
> Fig. 5B shows a perspective view of a back of a rotary encoder according to an example;
> Fig. 5C shows a magnet for a shaft according to an example;
> Fig. 5D shows a magnet for a shaft according to a second example;
> Fig. 6 shows an implementation of a controller according to an example.

DETAILED DESCRIPTION

According to a first aspect there is provided a rotary encoder comprising: a sensor configured to measure an angle of a rotating shaft; and a controller configured to: determine a first angle of the rotating shaft at a first time; determine a second angle of the rotating shaft at a second time; calculate an angular velocity based on: 1) an angular difference between the first angle and the second angle; and 2) a time difference between the first time and the second time; and transmit an output packet comprising the angular velocity.

In an embodiment the controlled is configured to determine the first angle based on an output of a sensor and is configured to determine the second angle based on an output of the sensor. In an embodiment an output of the sensor is a sinusoidal waveform indicating an angle of the rotating shaft. In an embodiment the angle is calculated directly from the output of the sensor. In an embodiment the first angle and the second angle are calculated to a same resolution as the angular resolution of the sensor output. In an embodiment the angular resolution of the sensor output is not reduced before determining the first angle and the second angle.

In an embodiment the output packet further comprises the second angle.

In an embodiment the angular velocity is calculated directly from the first angle and the second angle.

In an embodiment the controller is configured to calculate the angular velocity based on: the angular difference divided by the time difference.

In an embodiment the controller is further configured to normalise a value of the angular difference divided by the time difference.

In an embodiment the controller is configured to normalise the value of the angular difference divided by the time difference by dividing the value by ½ turn per 10 seconds.

In an embodiment the first angle and the second angle are each represented by a binary number having N bits and take a value from $2^N$ angular resolution movements and wherein the angular velocity is determined based to a number of angular resolution movements.

In an embodiment the controller is configured to transmit the output packet using a serial communication link.

In an embodiment the controller is configured to determine the first angle and the second angle using a look up table.

In an embodiment the rotary encoder is a magnetic rotary encoder.

In an embodiment the rotary encoder further comprises: a Printed Circuit Board on which the controller and the sensor are positioned; and a layer of lacquer over the controller and the sensor. In an embodiment there is provided a system comprising: a rotary encoder according to any of the above embodiments, and a control system communicatively coupled to the rotary encoder, wherein: the control system is configured to receive the output packet transmitted by the rotary encoder.

In an embodiment the control system is configured to transmit a request for position and speed information to the rotary encoder; and wherein: the rotary encoder is further configured to: determine the first angle, determine the second angle, calculate the angular velocity and transmit the output packet to the control system, in response to receiving the request.

In an embodiment the rotary encoder has a minimum request interval and wherein the rotary encoder is configured to ignore the request for position and speed information in response to determining that an amount of time equal to the minimum request interval has not elapsed since a previously received request.

According to a second aspect there is provided a method performed by a rotary encoder comprising a sensor configured to measure an angle of a rotating shaft, the method comprising: determining a first angle of the rotating shaft at a first time; determining a second angle of the rotating shaft at a second time; calculating an angular velocity based on: 1) an angular difference between the first angle and the second angle; and 2) a time difference between the first time and the second time; and transmitting an output packet comprising the angular velocity.

In an embodiment the output packet further comprises the second angle.

In an embodiment the angular velocity is calculated directly from the first angle and the second angle.

In an embodiment the controller is configured to calculate the angular velocity based on: the angular difference divided by the time difference.

In an embodiment the controller is further configured to normalise a value of the angular difference divided by the time difference.

In an embodiment the method further comprises normalizing the value of the angular difference divided by the time difference by dividing the value by ½ turn per 10 seconds.

In an embodiment the first angle and the second angle are each represented by a binary number having N bits and take a value from $2^N$ angular resolution movements and wherein the angular velocity is determined based to a number of angular resolution movements.

In an embodiment the method further comprises transmitting the output packet using a serial communication link.

In an embodiment the method further comprises determining the first angle and the second angle using a look up table.

In an embodiment the rotary encoder is a magnetic rotary encoder.

In an embodiment the rotary encoder further comprises: a Printed Circuit Board on which the controller and the sensor are positioned; and a layer of lacquer over the controller and the sensor. In an embodiment there is provided a system comprising the rotary encoder and a control system communicatively coupled to the rotary encoder, the method comprising: receiving the output packet transmitted by the rotary encoder.

In an embodiment the method further comprises transmitting, by the control system, a request for position and speed information to the rotary encoder; and, in response to receiving the request: determining the first angle, determining the second angle, calculating the angular velocity and transmitting the output packet to the control system.

In an embodiment the rotary encoder has a minimum request interval and the method further comprises ignoring the request for position and speed information in response to determining that an amount of time equal to the minimum request interval has not elapsed since a previously received request.

Rotary encoders can be categorised as 'single-turn' or 'multi-turn'. 'Single-turn' encoders measure angular displacement across 360 degrees from a defined starting position with an output that is repeated for every revolution of the encoder's shaft. A 'Multi-turn' encoder measures both the angular displacement across 360 degrees and the total number of revolutions of the shaft. The output of a 'Multi-turn' encoder uses a unique code word indicating the position and the number of revolutions.

Rotary encoders can also be categorised as 'absolute' or 'relative' encoders. An absolute encoder has a unique code/value for each shaft position and provides information indicating the absolute angular position of the shaft. A relative encoder generates an output each time the shaft rotates a certain amount, thereby providing an indication of the relative angular displacement from a given point.

In the following description reference will be made to 'single-turn' 'absolute' encoder. However it is emphasized, for the avoidance of any doubt, that the approaches described herein could be applied to other encoders.

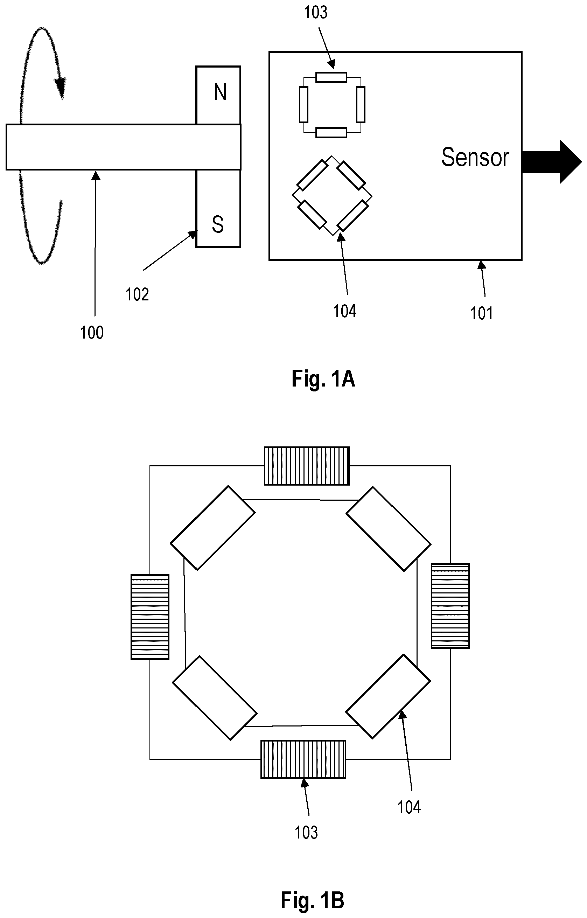

Fig. 1A shows part of a rotary encoder according to an example. As discussed above, a rotary encoder is configured to detect the rotational position of an axis. Fig. 1A shows an axis in the form of a shaft 100. The shaft 100 is arranged proximate to a sensor 101. A magnet 102 is attached to the shaft 100 for which the angular position is to be determined. The magnet 102 is attached to the shaft 100 such that the magnet 102 rotates with the shaft 100. As a result the magnetic field observed by the sensor 101 cylindrically changes with the rotation of the shaft 100.

The sensor 101 is configured to observe the magnetic field in its vicinity (which is predominantly caused by the orientation of the magnet 102 attached to the shaft 100) and output information indicating an angular position of the shaft 100. Various sensors can be used to sense the magnetic field (and therefore the angular position of the shaft 100).

In a first example the sensor 101 comprises magnetoresistive elements. Magnetoresistive (MR) elements make use of the magnetoresistive effect, which is the property of a current carrying magnetic material to change its resistance in the presence of an external magnetic field.

Consequently, when magnetoresistive elements are used in a rotary encoder, the resistance of the element changes as a function of the rotation angle of the shaft 100, $\alpha$.

In the example shown in Fig. 1A, the sensor 101 comprises a first Wheatstone measurement bridge 103 and a second Wheatstone measurement bridge 104, each comprising Magnetoresistive (MR) elements.

As known in the art, a Wheatstone bridge comprises four resistive elements arranged in a square formation. Specifically, in a Wheatstone bridge a first resistive element is electrically connected to a second resistive element and a third resistive element. The second resistive element is electrically connected to the first and fourth resistive element. The third resistive element is electrically connected to the first and fourth resistive element and the fourth resistive element is electrically connected to the second resistive element and the third resistive element. A power supply is connected at: 1) the connection between the first and the second resistive elements, and 2) the connection between the third and the fourth resistive elements. An output voltage is measured between: 1) the connection between the first and the third resistive elements, and 2) the connection between the second and the fourth resistive element. The measured output voltage varies between a positive voltage and a negative voltage depending on the resistance of each of the four resistive elements and is outputted by the sensor 101.

The first Wheatstone measurement bridge 103 and the second Wheatstone measurement bridge 104 each comprise four Magnetoresistive elements. Consequently, the output voltage from each Wheatstone bridge depends on the magnetic field present at each of the magnetoresistive elements, which in turn depends on the angular position of the shaft 100. In this way, each Wheatstone bridge is configured to generate an output signal that is a function of the angular position of the shaft 100. The first Wheatstone measurement bridge 103 and the second Wheatstone measurement bridge 104 are physically offset from each other by 45 degrees within a plane that is perpendicular to the axis of rotation of the shaft 100.

In Fig. 1A the first Wheatstone measurement bridge 103 and the second Wheatstone measurement bridge 104 are shown for illustration purposes. In an example a x-y plane comprises the first Wheatstone measurement bridge 103 and the second Wheatstone measurement bridge 104 and the magnetic field (caused by the magnet 102 attached to the shaft 100) rotates in the x-y plane (although the magnet 102 is positioned at a different z value than the sensor 101).

Fig. 1B shows a plan view of a sensor implementation according to an example. Fig. 1B shows the first Wheatstone measurement bridge 103 and the second Wheatstone measurement bridge 104 arranged in an x-y plane, where the second Wheatstone measurement bridge 104 is physically offset by 45 degrees.

Optionally the sensor 101 is an Integrated Circuit (IC). An example sensor 101 includes the "KMZ 43T" sensor IC from Philips Semiconductors®.

As discussed above, the first Wheatstone measurement bridge 103 and the second Wheatstone measurement bridge 104 are supplied with power and generate a sinusoidal output signal that oscillates as the shaft 100 rotates about its axis.

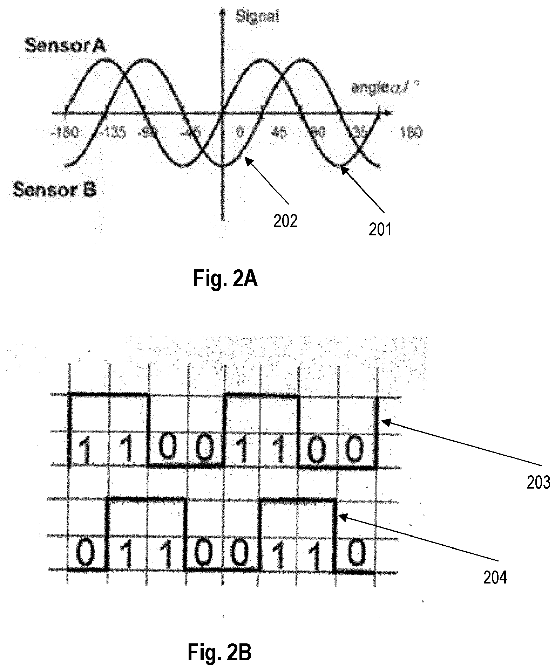

Fig. 2A shows output waveforms from a sensor according to an example. In particular, Fig. 2A shows the output waveforms generated by sensor, more particularly Fig. 2A shows a first output signal 201 generated by the first Wheatstone measurement bridge 103 and a second output signal 202 generated by the second Wheatstone measurement Bridge 104. In an example each measurement bridge outputs a sinusoidal signal that is repeated twice for every complete rotation of the shaft 100. The 45 degree physical offset between the measurement bridges manifests itself as a 45 degree phase offset between the first output signal 201 and the second output signal 202. Consequently, a rotating magnetic field in the x-y plane will produce two independent sinusoidal output signals, one a function of $+\cos(2\alpha)$ and the second a function of $+\sin(2\alpha)$, $\alpha$ being the angle between a reference direction and the magnetic field direction

An angular position of the shaft 100 is subsequently determined based on the first output signal 201 and the second output signal 202.

As will be apparent from Fig. 2A, each combination of the first output signal 201 value and the second output signal 202 value is uniquely associated with an shaft angle, $\alpha$, between 0 and 180 degrees.

There are various ways to determine the shaft angle, $\alpha$. In a first example the (analogue) output signal of the measurement bridges is digitised (such that the output signal takes any one of $2^N$ states, N being the number of bits used to represent the output signal). A look-up-table (LUT) comprising a mapping from: each combination of the digitised first output signal and the digitised second output signal, to: an angle of the shaft 100, is subsequently used to determine an angle of the shaft 100.

In a further example the first output signal 201 and the second output signal 202 are inputted into a comparator configured to output, for each input, a binary '1' when the output signal is greater than 0V, and a binary '0' when the output signal is less than or equal to 0V.

Fig. 2B shows an example comparator output for the waveform shown in Fig. 2A. Fig. 2B shows a first digital waveform 203 associated with the first output signal 201, and a second digital waveform associated with the second output signal 202. Each 45 degree angular segment (between 0 and 180 degrees) is associated with a unique combination of the first digital waveform value and the second digital waveform value (e.g. "10" for 0 - 45 Degrees, "11" for 45 - 90 Degrees, "01" for 90 - 135 Degrees, "00" for 135 to 180 Degrees").

In an example there are four look-up-tables (LUTs), each look-up-table associated with one of the angular segments. Consequently, in this example the angle is determined by first identifying the relevant angular segment from the output of the comparator, and then using the look-up-table associated with the current angular segment to determine the angular position of the shaft 100. This technique is described further in GB 2453580, which is incorporated herein by reference. Other techniques to determine an angle of the shaft 100 from the first output signal 201 and the second output signal 202 could also be used. In an example, the angular position of the shaft is determined according to:

$$\alpha = \frac{1}{2} \tan^{-1}\left(\frac{A}{B}\right)$$

Where A is the value of the first output signal 201 and B is the value of the second output signal 202.
Each of the techniques above provide an angular resolution to 180 degrees. As will be apparent from Fig. 2A, two angles between -180 degrees and +180 degrees are associated with the same combination of Sensor A and Sensor B readings. Consequently, in an example, there is provided a second sensor to determine which half-turn (i.e. which 180 degree segment) the shaft 100 is located in.

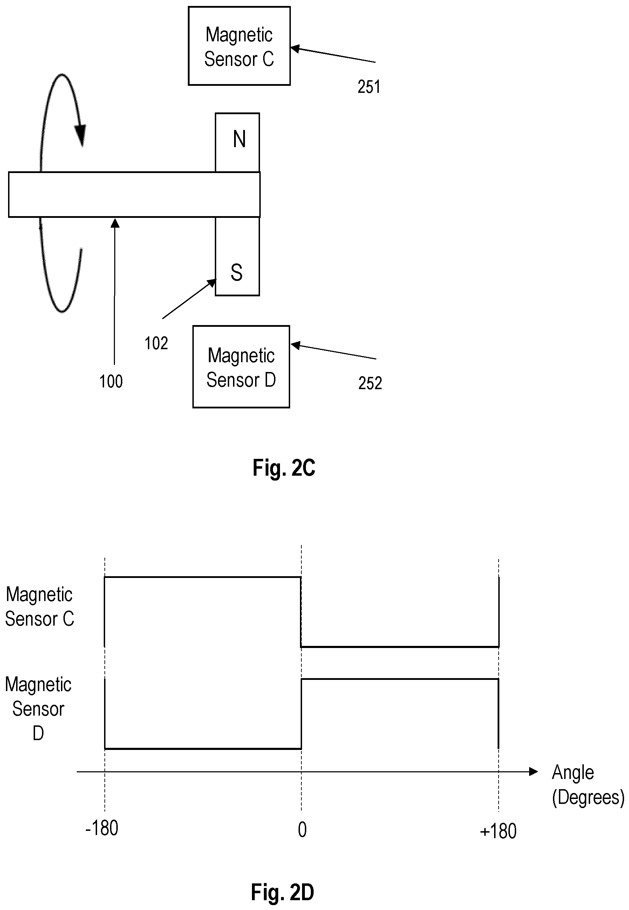

Fig. 2C shows a second sensor for determining an angular position according to an example. Fig. 2C shows the shaft 100, with the magnet 102 attached to the shaft 100. In an example, the second sensor comprises at least two unipolar magnetic sensors. In an example, the at least two unipolar magnetic sensors include magnetic sensor C 251 and magnetic sensor D 252. In an example, magnetic sensor C 251 and magnetic sensor D 252 are positioned opposite each other (relative to the centre of the shaft 100). Each of the unipolar magnetic sensors are configured to sense a magnetic field in a given direction and output an indication when the sensed magnetic field is above a threshold. As discussed above, the magnet 102 comprises a north pole and a south pole. Consequently, in a first half-turn (i.e. within a first 180 degree segment), a first magnetic sensor (e.g. magnetic sensor C) outputs an indication that the magnetic field is above a threshold. In the first half-turn the opposite magnetic sensor (e.g. magnetic sensor D 252) does not output an indication. Once the shaft 100 turns through a half-turn (e.g. 180 degrees), the second magnetic sensor (e.g. magnetic sensor D) outputs an indication that the magnetic field is above a threshold, and the first magnetic sensor (e.g. magnetic sensor C) outputs an indication that the magnetic field is below a threshold. Using this arrangement of unidirectional sensors it is possible to determine the half-turn that the shaft 100 is currently located in.
Fig. 2D shows an output of a second sensor according to an example. In particular Fig. 2D shows the output of the at least two unipolar magnetic sensors as a function of shaft angle. Fig. 2D shows that for a first half-turn (e.g. between -180 degrees and 0 degrees) magnetic sensor C 251 outputs an indication that the magnetic field is above a threshold, and for a second half-turn (e.g. between 0 degrees and 180 degrees) magnetic sensor D 252 outputs an indication that the magnetic field is above the threshold. In this way, the second sensor can be used to determine which half-turn the shaft 100 is located in.
In an example the unipolar magnetic sensor comprises an Infineon® Hall Effect Switch TLE4906K/L. In another example the unipolar magnetic sensor comprises an Allegro® A110x hall-effect switch.
The outputs of the second sensor combined with the outputs of the sensor 101 are used to determine an angle of the shaft 100 within a 360 degree angular resolution (e.g. an angle between -180 and + 180 degrees).
In an example where there are two unipolar magnetic sensors as discussed in relation to Fig. 2C and Fig. 2D, an angle within a 360 degree angular resolution is determined by first determining an angle within a 180 degree angular range as described in relation to Fig. 2A and Fig. 2B (e.g. using a look up table or an equation based on the output of a Wheatstone bridge). This angle is then modified depending on the output of the second sensor. For example, if the output of the second sensor indicates that the angular position of the shaft 100 is in a first half-turn (e.g. by magnetic sensor C 251 indicating that the magnetic field is above a threshold), then the angle calculated using the output of the sensor is unmodified (e.g. remains with 0 to 180 degrees). If on the other hand the output of the second sensor indicates that the angular position of the shaft 100 is in a second half-turn (e.g. by magnetic sensor D 252 indicating that the magnetic field is above a threshold), then the angle calculated using the output of the sensor is adjusted by subtracting 180 degrees (thereby generating an angle between -180 degrees and 0 degrees). In this case an angular resolution of 360 degrees is obtained.
In the example above the second sensor comprises two unipolar magnetic sensors. However, for the avoidance of any doubt it is emphasized that different numbers of unipolar magnetic sensors can be used. In another example at least one unipolar magnetic sensor is provided to indicate the angular position of the shaft 100 to a precision of a half-tum.
In the example above a specific type of sensor is used (i.e. a sensor comprising a first Wheatstone measurement bridge 103 and a second Wheatstone measurement bridge 104). As a result, the methods of determining an angular displacement of the shaft 100 are discussed in relation to the output signals generated by that sensor. However, it is emphasized, for the avoidance of any doubt, that any other sensor could be used instead provided the sensor is configured to measure a rotating magnetic field and output information that can be used to determine an angular position of the shaft 100.

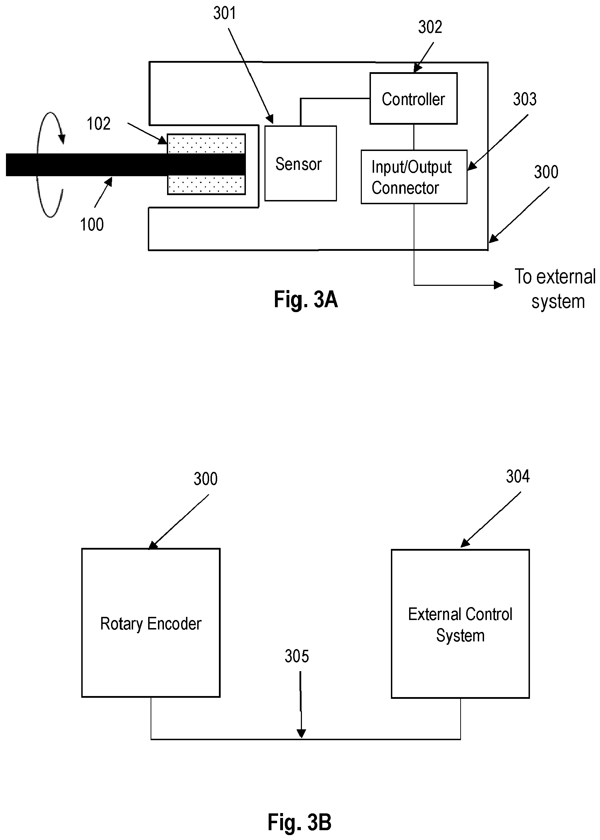

Fig. 3A shows a rotary encoder according to an example. In particular, Fig. 3A shows a rotary encoder 300 comprising a sensor 301 communicatively coupled to a controller 302. The controller 302 also being communicatively coupled to an input/output connector 302. For reference, Fig. 3A also shows a shaft 100 and a magnet 102.

The sensor 301 is configured to measure a magnetic field in its proximity and output an indication of the magnetic field strength and direction. In an example, the sensor 301 comprises a first Wheatstone measurement bridge 103 and a second Wheatstone measurement bridge 104 as discussed above, and the sensor is configured to output two sinusoidal signals as the shaft 100 rotates as discussed in relation to Fig. 2A. Optionally the sensor is the "KMZ 43T" sensor IC from Philips Semiconductors®. The output of the sensor 101 is communicatively coupled to the controller 302. In an example, the sensor 301 also comprises the second sensor (e.g. comprising magnetic sensor C 251 and magnetic sensor D 252 and the associated comparators as discussed in relation to Fig. 2C and Fig. 2D) and outputs an indication of whether the shaft 100 is in a first half turn or a second half turn.

The controller 302 is configured to determine the angular position of the shaft 100 based on the output of the sensor 301 using the techniques described above. As will be discussed in more detail below, the controller 302 is also configured to determine an angular velocity of the shaft 100 based on the output of the sensor 301.

Optionally, the rotary encoder 300 also comprises a comparator (not shown) connected to an output of the sensor 301. The comparator 302 is configured to output an indication (i.e. '0' or '1') of whether the output of the sensor 301 is greater than (e.g. output '1') or less than (e.g. output '0') than a threshold. Optionally the threshold is 0V. The output of the comparator is connected to the controller 302. In this example the controller 302 is configured to determine an angular position of the shaft 100 based on the output of the comparator and the output of the sensor 301.

The controller 302 is configured to generate an output communication packet comprising the angular position of the shaft 100 and/or the angular velocity of the shaft 100. In an example the controller 302 is configured to output position and speed information in the same serial data packet. The controller is configured to transmit the communication packet via the input/output connector 303 to an external system.

In one example the input/output connector 303 is configured to receive data from the controller 302 and transmit the data over a serial communication link to the external system. Optionally the input/output connector is configured to communicate with the external system using an RS485 communication interface. In an example, the communication interface uses 1 start bit, 8 data bits, 1 stop bit and even parity.

Other communication mechanisms could be used. For example, in another example the input/output connector 303 is configured to receive data (i.e. the packet comprising the angular position and/or angular velocity) from the controller 302 and transmit the data over a wireless interface (e.g. over a Wi-Fi network or a cellular network).

The input/output connector 303 is configured for bidirectional communication. That is to say, the rotary encoder 300 is configured to communicate with an external system and receive communications from an external system via the input/output connector 303. Communications received via the input/output connector 303 are transmitted to the controller 302.

The rotary encoder 300 also comprises a connector to a power supply (not shown). The connector to the power supply is electrically connected to the sensor 301, the controller 302 and the

Input/Output connector 303. Consequently, when a power supply is connected to the rotary encoder 300 power is supplied to the respective components so that they can perform their respective functions. Optionally the power supply to the rotary encoder is 10 - 30 Volts (DC). In an example the rotary encoder is configured to consume 30 mA of current.

Fig. 3B shows a system according to an example. In particular Fig. 3B shows a rotary encoder 300 communicatively coupled to an external control system 304 via a bi-directional communication link 305. In the examples discussed below the bi-directional communication link 305 is a wired communication link (for communicating data according to the RS485 protocol). However, for the avoidance of any doubt it is emphasized that wireless communication links could be used instead.

In an example the rotary encoder 300 and the external control system 304 are configured in a master slave relationship where the external control system 304 is the master and is configured to transmit requests for the position and speed of the shaft 100 to the rotary encoder 300. In this example the rotary encoder 300 is the slave and is configured to respond to requests from the master for position and speed information. Optionally the rotary encoder 300 imposes a minimum request interval on requests (i.e. the rotary encoder 300 will only respond to a request that is received more than the minimum request interval since the previous request (being actioned) was received). Optionally the request interval minimum is 1 millisecond.

In an example the input/output connector 303 is configured to communicate data with the external control system 304 at 100 k Baud.

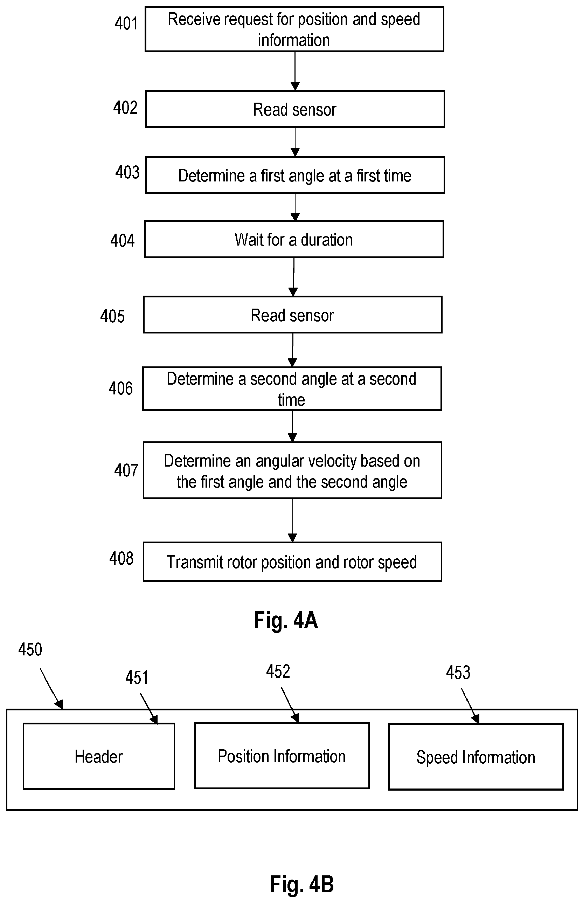

Fig. 4A shows a method implemented by a controller of a rotary encoder according to an example. The method begins in step 401 by the controller 302 receiving a request for position and speed information. In an example the request is received from the external control system 304 via the communication link 305 (e.g. by virtue of the external control system 304 transmitting the request). Optionally the request for position and speed is 2 bytes in size. In another example the request is generated internally (i.e. by the rotary encoder 300) such that the rotary encoder 300 is configured to periodically report the speed and position information.

After receiving the request the method proceeds to step 402. In step 402 the sensor (i.e. sensor 301) is read. That is to say, in step 402 the magnetic field in the vicinity of the sensor 301 is observed. The method proceeds to step 403.

In step 403 a first angle of the shaft 100 is determined. The first angle determined in step 403 is associated with a first time. The first time being the time at which the sensors were sampled in step 402.

The first angle of the shaft 100 is determined from the output of the sensor 301. Optionally the first angle takes a value between -180 degrees and + 180 degrees inclusive. In the example where the sensor 301 implements a first and a second Wheatstone measurement bridge (i.e. as discussed in relation to Fig. 1A and Fig. 1B), the controller 302 determines the first angle based on the first output signal 201 and the second output signal 202 as discussed above (e.g. by using a look-up-table or by direct calculation). The controller 302 may also determine the angle based on the output of a comparator as discussed above. After determining the first angle of the shaft 100 the method proceeds to step 404.

In step 404 the method waits for a duration. That is to say, the controller 302 starts a timer and proceeds to step 405 once the elapsed time since starting the timer equals the duration. Optionally the duration is predetermined. Optionally the duration is 50 milliseconds.

In step 405 the sensors are read as in step 402 (i.e. the magnetic field in the vicinity of the sensor 301 is observed by recording the values of the output signals outputted by the sensor 301). After reading the sensor the method proceeds to step 406.

In step 406 the controller 302 determines the second angle at the second time. The second angle is determined based on the output of the sensor 301 obtained in step 405. In an example the controller 302 determines the first angle based on the first output signal 201 and the second output signal 202 as discussed above (e.g. by using a look-up-table or by direct calculation). After determining a second angle in step 406 the method proceeds to step 407.

In step 407 the controller 302 determines an angular velocity based on the first angle (determined in step 403) and the second angle (determined in step 406). The angular velocity is also determined based on the duration of time between measuring the first angle and measuring the second angle (i.e. the duration waited in step 404). In an example the angular velocity is calculated according to:

$$\omega = \frac{\Delta\theta}{\Delta t}$$

Where $\Delta\theta$ is angular the difference between the first angle and the second angle and $\Delta t$ is the time difference between observing the sensor (i.e. the duration waited in step 404). Where the angle is measured in degrees and the time is measured in seconds, the calculated angular velocity is in degrees/second. Other units could be used. For example, the first and second angles can be determined in radians instead.

In an example, the controller 302 continuously tracks the rotation direction of the shaft 100. For example, the controller 302 determines whether the shaft is rotating clockwise or anti-clockwise based on at least two previous angle measurements. For example, based on whether the angle of the shaft 100 is advancing in a first direction or a second direction.

In an example, the rotation direction of the shaft 100 is used to calculate the angular difference. More specifically, the angular difference is calculated according to the angular movement required in the rotation direction between the first angle and the second angle.

By way of an example, if the first angle is 0 degrees and the second angle is 10 degrees then the angular difference could be 10 degrees in a first direction (e.g. clockwise) or 350 degrees in a second direction (e.g. anti-clockwise). In the example where the controller 302 continuously tracks the rotation direction, the angular difference is selected based on the direction that matches the tracked rotation direction. For example, if the controller 302 determines that the shaft 100 is rotating in the first direction (e.g. based on the previous angle measurements) then the angular difference in the first direction (i.e. 10 degrees) is selected as the angular difference. If the controller 302 determines that the shaft 100 is rotating in the second direction then the angular difference in the second direction (i.e. 350 degrees) is selected as the angular difference.

In the above example, the angular difference is calculated in degrees and the time difference is calculated in seconds. Consequently, the angular velocity is in units degrees/second. In another example a different set of units is used. In this example the controller 302 is configured to represent the first angle and the second angle as a binary number. Optionally the binary number has length 11 bits, thereby representing an angular resolution of 2048 steps. In this case the first angle is an 11 bit binary number and the second angle is an 11 bit binary number. In step 407 the difference between the first angle and the second angle is calculated based on the number of resolution steps between the first angle and the second angle. In an example, the rotation direction of the shaft 100 is tracked by the controller 302 and is used when determining the angular difference (in binary representation) as discussed above. The angular velocity (i.e. the speed) subsequently calculated by dividing the resolution movement by the time between observations. For example, a first angle is a 1058 resolution movements, the second angle is 1063 resolution movements, the difference between the first angle and the second angle is 5 absolute resolution movements and the time taken to complete 5 absolute resolution movements is 50 milliseconds. In this case the speed (i.e. the angular velocity) is calculated according to (1/time) $\times$ resolution movement = $(1/50 \times 1E\text{-}3) \times 5 = 100$. The units being: resolution movements/second.

In another illustrative example of determining angular velocity using resolution movements instead of an angular difference in degrees, determining a first angle at a first time in step 403 comprises obtaining an angle in resolution movements, determining a second angle at a second time 406 comprises obtaining an angle in resolution movements, and the angular velocity in step 407 is determined based on the angular resolution measurements. In an example, the encoder has an angular resolution of 0.25 degrees (and therefore 360/0.25 = 1440 resolution movements in a full rotation). A first angle, measured at the first time in step 403 is "100" resolution movements, a duration of 0.1 second is waited in step 404, and a second angle, obtained in step 406 is "105" resolution movements. A number of resolution movements, N, is calculated based on the second angle (expressed in resolution movements) minus the first and (expressed in resolution movements). In this example, the angular velocity is calculated in degrees per minute, where the angular difference is measured in absolute resolution movements. The angular velocity in step 407 is calculated according to: angular velocity (degrees per minute) = (angular resolution * N * (60/time delay in seconds)). In this example the angular velocity is calculated as: (0.25 * 5 * (60/0.1)) = 750 Degrees/Minute.

Optionally step 407 also comprises a normalisation step. In an example the determined speed is normalised by ½ a turn per 10 seconds to generate a speed output value between 0 and 100. Specifically, the calculated speed is divided by an angular velocity of 18 degrees per second (i.e. 180degrees/10 seconds) or, when using resolution movements per second, 102.4 resolution movements per second (i.e. 1024 resolution movements/10 seconds). Thereby generating a speed output value between 0 and 100.

Advantageously the speed is calculated by the rotary encoder 300 using the angle value obtained directly from the output of the sensor 301. This can lead to more accurate speed measurements. For example, in a different approach the speed measurement is calculated from the output of a comparator as shown in Fig. 2B. For example, the speed could be determined based on the number of pulses per second of the first digital waveform 203. In Fig. 2B the angular difference between successive edges is 90 degrees, for example a rising edge occurs at 0 degrees for the first digital waveform 203 and a falling edge occurs at 90 degrees for the first digital waveform 203. By counting the number of edges the number of 90 degree resolutions (i.e. ¼ turns) can be counted. Similarly, the time between pulses can be measured and used to determine the angular velocity (i.e. the number of 90 degree resolutions multiplied by 90 degrees, divided by the measured time). However both of these methods lack precision since the number of pulses is limited and when there are smaller movements (e.g. less than ¼ of a turn) there are no pulses to count. Instead the approach disclosed herein measures the speed directly from the absolute angular position measurements generated by the encoder using the outputs of the sensor 301, leading to more precise and accurate speed measurements. Or put in other words, the method of Fig. 4A calculates the angle from the output of the sensors with their full resolution (i.e. there is no processing of the outputs of the sensor before angle determination, or in other words, the angular resolution has not been reduced before the calculation takes place). As a result, the angular difference has a similar precision as the precision of the sensor itself.

In a further example, steps 402 - 407 are repeated a plurality of times before proceeding to step 408. In particular, after determining a first angular velocity value in step 407 the method returns to step 402 (optionally after a short delay). Steps 402 - 407 are repeated thereby generating a second angular velocity value. Optionally, the controller 302 selects the highest value (i.e. the max) of the first angular velocity value and the second angular velocity value as the angular velocity.

In a different example the controller 302 calculates the angular velocity based on an average of the first angular velocity value and the second angular velocity value. In an example steps 402 - 407 are repeated a plurality of times to generate a plurality of angular velocity values, and a single angular velocity value is generated based on the plurality of angular velocity values (either by selecting a max or by averaging).

After determining an angular velocity in step 407 the method proceeds to step 408 where the absolute position and the speed of the shaft 100 are transmitted. The absolute position and speed is transmitted by the rotary encoder 300 to the external control system 304. As discussed above the speed information transmitted by the rotary encoder 300 can be used for controlling the machine that comprises the shaft 100. In particular for torque control on motors/gears.

The absolute position and speed is transmitted by the rotary encoder 300 in the form of an output communication packet (also referred to as a response telegram).

Fig. 4B shows a structure of an output communication packet according to an example. In particular, Fig. 4B shows a packet 450 comprising a header 451, position information 452 and speed information 453. In an example the output communication packet is 5 bytes in length, where the header 451 is 1 byte in length, the position information 452 is 2 bytes in length and the speed information is 2 bytes in length. The position information 452 comprises the second angle determined in step 406 (which could be represented in degrees, radians, or resolution step number) and the speed information 453 comprises the angular velocity determined in step 407.

Calculating the angular velocity at the rotary encoder 300 advantageously reduces the communications overhead as it avoids the need to repeatedly send absolute position information to the external control system 304. Furthermore, calculating the speed directly from the absolute position as discussed above increases the accuracy of the reported speed.

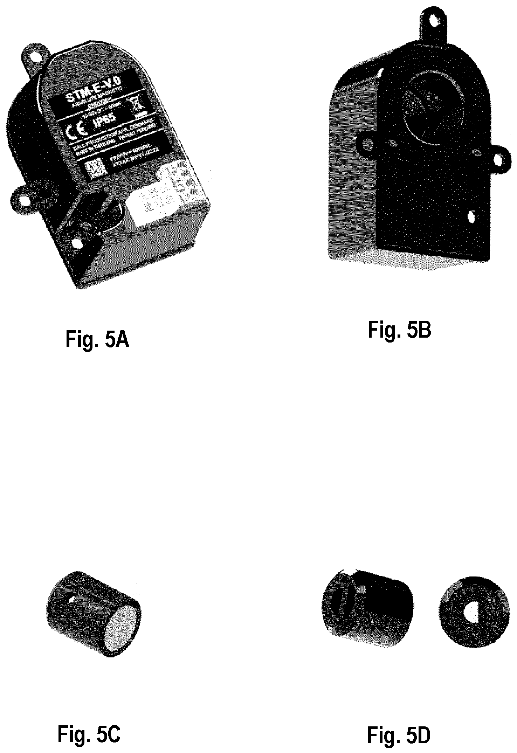

Fig. 5A shows a perspective view of a front of a rotary encoder according to an example. In particular Fig. 5A shows a perspective view of the front of an enclosure. The enclosure comprising the components discussed in relation to Fig. 3A.

Fig. 5B shows a perspective view of a back of a rotary encoder according to an example.

Optionally, and as shown in Fig. 5A and Fig. 5B, the rotary encoder comprises a connector for easy connection. Optionally the connector is an AMP 6-pin connector. Optionally the rotary encoder 300 also comprises screwless terminals for safety chain connections. Optionally the safety chain terminals are Wago 250204 (Cage Clamp).

In an example the protection class of the rotary encoder 300 is IP20 and the rotary encoder 300 is rated for temperatures from -25 to + 75 degrees Celsius.

Fig. 5C shows a magnet for a shaft according to an example. In particular Fig. 5C shows a standard rotor with a magnet. Optionally the rotor is for use with a 12mm diameter shaft. In use the standard rotor of Fig. 5C is placed over an end of the shaft, thereby replicating the arrangement discussed in relation to Fig. 1A.

Fig. 5D shows a magnet for a shaft according to a second example. In particular Fig. 5D shows a rotor for a half moon shaft. Optionally the rotor of Fig. 4D is for use with a half moon shaft with a 7.9mm diameter.

In an example the components of the rotary encoder 300 (i.e. the sensor 301, the controller 302 and the input/output connector 303) are implemented in hardware and located on a Printed Circuit Board. Optionally a circuit board lacquer is provided on the printed circuit board to protect against humidity.

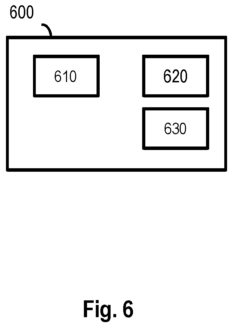

Fig. 6 shows an implementation of a controller according to an example. The controller 600 comprises an input/output module 610, a processor 620 and a non-volatile memory 630. The input/output module 610 is configured to receive readings from the sensor 301 and to transmit and receive data from the input/output connector 303. The processor 620 is coupled to the input/output module 610 and to the non-volatile memory 630. The non-volatile memory 630 stores computer program instructions that, when executed, cause the processor 620 to execute program steps that causes the controller (using the input/output module 610) to implement the method as discussed in relation to Fig. 4A.

While certain arrangements have been described, the arrangements have been presented by way of example only, and are not intended to limit the scope of protection. The inventive concepts described herein may be implemented in a variety of other forms. In addition, various omissions, substitutions and changes to the specific implementations described herein may be made without departing from the scope of protection defined in the following claims.

**Claims**

1. A rotary encoder comprising:

    a sensor configured to measure an angle of a rotating shaft; and
    a controller configured to:

       determine a first angle of the rotating shaft at a first time;
       determine a second angle of the rotating shaft at a second time;
       calculate an angular velocity based on: 1) an angular difference between the first angle and the second angle; and 2) a time difference between the first time and the second time; and
       transmit an output packet comprising the angular velocity.

2. The rotary encoder according to claim 1, wherein the output packet further comprises the second angle and/or wherein the angular velocity is calculated directly from the first angle and the second angle and/or

3. The rotary encoder according to any preceding claim, wherein the controller is configured to calculate the angular velocity based on: the angular difference divided by the time difference.

4. The rotary encoder according to claim 3, where the controller is further configured to normalise a value of the angular difference divided by the time difference.

5. The rotary encoder according to claim 4, wherein the controller is configured to normalise the value of the angular difference divided by the time difference by dividing the value by ½ turn per 10 seconds.

6. The rotary encoder according to any preceding claim, wherein the first angle and the second angle are each represented by a binary number having N bits and take a value from $2^N$ angular resolution movements and wherein the angular velocity is determined based to a number of angular resolution movements and/or wherein the controller is configured to transmit the output packet using a serial communication link and/or wherein the controller is configured to determine the first angle and the second angle using a look up table and/or wherein the rotary encoder is a magnetic rotary encoder and/or wherein the rotary encoder further comprises:

> a Printed Circuit Board on which the controller and the sensor are positioned; and
> a layer of lacquer over the controller and the sensor.

7. A system comprising:

> a rotary encoder according to any preceding claim, and
> a control system communicatively coupled to the rotary encoder, wherein:
> the control system is configured to receive the output packet transmitted by the rotary encoder.

8. The system according to claim 7, wherein:
the control system is configured to transmit a request for position and speed information to the rotary encoder; and wherein:
the rotary encoder is further configured to:
determine the first angle, determine the second angle, calculate the angular velocity and transmit the output packet to the control system, in response to receiving the request.

9. The system according to claim 7, wherein the rotary encoder has a minimum request interval and wherein the rotary encoder is configured to ignore the request for position and speed information in response to determining that an amount of time equal to the minimum request interval has not elapsed since a previously received request.

10. A method performed by a rotary encoder comprising a sensor configured to measure an angle of a rotating shaft, the method comprising:

> determining a first angle of the rotating shaft at a first time;
> determining a second angle of the rotating shaft at a second time;
> calculating an angular velocity based on: 1) an angular difference between the first angle and the second angle; and 2) a time difference between the first time and the second time; and
> transmitting an output packet comprising the angular velocity.

11. The method according to claim 10, wherein the output packet further comprises the second angle and/or wherein the angular velocity is calculated directly from the first angle and the second angle.

12. The method according to any preceding claim, wherein the controller is configured to calculate the angular velocity based on: the angular difference divided by the time difference.

13. The method according to claim 12, where the controller is further configured to normalise a value of the angular difference divided by the time difference.

14. The method according to claim 13, wherein the method further comprises normalizing the value of the angular difference divided by the time difference by dividing the value by ½ turn per 10 seconds.

15. The method according to any of claims 11 - 14, wherein the first angle and the second angle are each represented by a binary number having N bits and take a value from $2^N$ angular resolution movements and wherein the angular velocity is determined based to a number of angular resolution movements and/or wherein the method further comprises transmitting the output packet using a serial communication link and/or wherein the method further comprises determining the first angle and the second angle using a look up table and/or wherein the rotary encoder is a magnetic rotary encoder and/or wherein the rotary encoder further comprises:

> a Printed Circuit Board on which the controller and the sensor are positioned; and
> a layer of lacquer over the controller and the sensor.

**Fig. 1A**

**Fig. 1B**

Fig. 2A

Fig. 2B

Magnetic Sensor C

251

N

S

102

100

Magnetic Sensor D

252

**Fig. 2C**

Magnetic Sensor C

Magnetic Sensor D

Angle (Degrees)

-180    0    +180

**Fig. 2D**

301

302

102

Controller

303

Sensor

Input/Output
Connector

300

100

To external
system

**Fig. 3A**

300

304

Rotary Encoder

External Control
System

305

**Fig. 3B**

Fig. 4A

Fig. 4B

Fig. 5A

Fig. 5B

Fig. 5C

Fig. 5D

600

610

620

630

**Fig. 6**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 451 592 A1 (LUCAS INDUSTRIES LTD [GB]) 1 September 2004 (2004-09-01) * Abstract, Desc. , [0002], [0044]-[0056], claim 1, Figs. 1-5 * | 1-3,6, 10-12,15 | INV. G01P3/487 |
| X | WO 2021/240191 A1 (NISSAN MOTOR [JP]; RENAULT SAS [FR]) 2 December 2021 (2021-12-02) * Abstract, Desc. [0028]-[0039], Fig. 2 * | 1-3,7-12 | |
| X | DE 10 2004 039739 A1 (ZAHNRADFABRIK FRIEDRICHSHAFEN [DE]) 23 February 2006 (2006-02-23) * Desc. [0004]-[0005], [0010], [0019]-[0025], [0034]-[0038], Figs. 1-2 * | 1,10 | |
| X | DE 10 2010 062273 A1 (CONTINENTAL TEVES AG & CO OHG [DE]) 6 June 2012 (2012-06-06) * Abstract, Desc. [0029]-[0043], Figs. 1-3 * | 1,10 | |
| | | | TECHNICAL FIELDS SEARCHED (IPC) |
| X | US 2009/315541 A1 (ZAK MARK [US]) 24 December 2009 (2009-12-24) * Abstract, Desc. [0029] * | 1-5, 10-14 | G01P |

The present search report has been drawn up for all claims

| Place of search | Date of completion of the search | Examiner |
|---|---|---|
| Munich | 29 January 2024 | Reim, Klaus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                   

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 5447

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | | Publication date | Patent family member(s) | | | Publication date |
|---|---|---|---|---|---|---|---|
| EP | 1451592 | A1 | 01-09-2004 | AU | 2002347387 | A1 | 09-07-2003 |
| | | | | DE | 60214588 | T2 | 31-05-2007 |
| | | | | EP | 1451592 | A1 | 01-09-2004 |
| | | | | ES | 2268117 | T3 | 16-03-2007 |
| | | | | JP | 4652688 | B2 | 16-03-2011 |
| | | | | JP | 2005513483 | A | 12-05-2005 |
| | | | | KR | 20040070200 | A | 06-08-2004 |
| | | | | US | 2004251894 | A1 | 16-12-2004 |
| | | | | WO | 03054556 | A1 | 03-07-2003 |
| WO | 2021240191 | A1 | 02-12-2021 | BR | 112022024150 | A2 | 27-12-2022 |
| | | | | CN | 115667852 | A | 31-01-2023 |
| | | | | EP | 4160158 | A1 | 05-04-2023 |
| | | | | JP | 7395731 | B2 | 11-12-2023 |
| | | | | JP | WO2021240191 | A1 | 02-12-2021 |
| | | | | US | 2023175871 | A1 | 08-06-2023 |
| | | | | WO | 2021240191 | A1 | 02-12-2021 |
| DE | 102004039739 | A1 | 23-02-2006 | NONE | | | |
| DE | 102010062273 | A1 | 06-06-2012 | DE | 102010062273 | A1 | 06-06-2012 |
| | | | | EP | 2646836 | A1 | 09-10-2013 |
| | | | | US | 2013300324 | A1 | 14-11-2013 |
| | | | | WO | 2012072438 | A1 | 07-06-2012 |
| US | 2009315541 | A1 | 24-12-2009 | BR | PI0812593 | A2 | 25-04-2017 |
| | | | | CA | 2687057 | A1 | 18-12-2008 |
| | | | | CN | 101707879 | A | 12-05-2010 |
| | | | | EP | 2170664 | A1 | 07-04-2010 |
| | | | | ES | 2676508 | T3 | 20-07-2018 |
| | | | | JP | 5209707 | B2 | 12-06-2013 |
| | | | | JP | 2010529456 | A | 26-08-2010 |
| | | | | US | 2009315541 | A1 | 24-12-2009 |
| | | | | WO | 2008153976 | A1 | 18-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2453580 A